# EUROPEAN PATENT APPLICATION

(11) **EP 4 725 973 A1**
(43) Date of publication of application: **15.04.2026**
(21) Application number: 24819167.8
(22) Date of filing: 23.05.2024
(51) Int. Cl.: C08G 18/30, B32B 15/095, B32B 27/40, B65D 65/40, C09J 175/04

(54) **POLYISOCYANATE COMPOSITION, TWO-PART CURABLE COMPOSITION, TWO-PART CURABLE ADHESIVE, LAMINATE, AND PACKAGING MATERIAL**

(30) Priority: 08.06.2023 JP 2023094644
(71) Applicant: DIC Corporation, Tokyo 174-8520 (JP)
(72) Inventor: TOMITA, Daiki, Tokyo 174-8520 (JP); KAYASUGA, Tomoya, Tokyo 174-8520 (JP)
(74) Representative: Kraus & Lederer PartGmbB
(86) International application number: PCT/JP2024/018931
(87) International publication number: WO 2024/252934

(57) **Abstract**

Provided is a polyisocyanate composition which is suitable for a two-part curable composition requiring adhesion to a metal base material; and an adhesive which suppresses a decrease in adhesion between an adhesive layer and a metal foil or a metal-deposited film, even when a base material having a metal foil such as aluminum foil or a metal-deposited layer of aluminum or the like, and a plastic film, are bonded together. Also provided is a polyisocyanate composition containing a polyurethane polyisocyanate (A1) and an isocyanate compound (A2) which is a reaction product of an aliphatic hydroxycarboxylic acid and a diisocyanate; and a two-part curable adhesive using the polyisocyanate composition.

## Description

### TECHNICAL FIELD

The present invention relates to a polyisocyanate composition, a two-part curable composition, a two-part curable adhesive, a laminate, and a packaging material.

### BACKGROUND ART

Laminates used in various packaging materials and labels are imparted with design properties, functionality, storability, convenience, and transport durability by laminating base materials such as various types of plastic films, metal foils, and paper. Packaging materials obtained by forming the laminates into bags are used as packaging materials in various fields, such as foods, pharmaceuticals, and detergents.

Conventionally, the dry lamination method has been mainly used to obtain laminate films, in which a two-part curable adhesive in which a polyisocyanate compound and a polyol compound are dissolved in a volatile organic solvent, is coated to a film, the volatile organic solvent is evaporated in the process of passing through an oven, and another film is bonded. In recent years, from the viewpoints of reducing environmental burden and improving working environments, attention has been focused on two-part curable solvent-free adhesives in which the polyisocyanate compound and the polyol compound do not contain volatile organic solvents (Patent Literature 1, Patent Literature 2).

### CITATION LIST

### PATENT LITERATURE

PTL 1: JP 2014-159548 A
PTL 2: JP 2001-172602 A

### SUMMARY OF INVENTION

### TECHNICAL PROBLEM

When such two-part curable adhesives are used to bond base materials having a metal foil such as aluminum foil or a metal-deposited layer of aluminum or the like, and a plastic film, adhesion between an adhesive layer and a metal foil or a metal-deposited film may decrease over time.

The present invention has been made in view of such circumstances, and is intended to provide an adhesive which suppresses a decrease in adhesion between an adhesive layer and a metal foil or a metal-deposited film, even when a base material having a metal foil such as aluminum foil or a metal-deposited layer of aluminum or the like, and a plastic film, are bonded together.

The present invention is also intended to provide a polyisocyanate composition which is suitable for a two-part curable composition requiring adhesion to a metal base material.

### SOLUTION TO PROBLEM

That is, the present invention relates to a polyisocyanate composition containing a polyurethane polyisocyanate (A1), and an isocyanate compound (A2) which is a reaction product of an aliphatic hydroxycarboxylic acid and a diisocyanate; and a two-part curable adhesive using the polyisocyanate composition.

### ADVANTAGEOUS EFFECTS OF INVENTION

According to the present invention, even when a base material having a metal foil such as aluminum foil or a metal-deposited layer of aluminum or the like, and a plastic film, are bonded together, an adhesive which suppresses a decrease in adhesion between an adhesive layer and a metal foil or a metal-deposited film, can be provided.

Further, a polyisocyanate composition which is suitable for a two-part curable composition requiring adhesion to a metal base material, can also be provided.

### DESCRIPTION OF EMBODIMENTS

### <Polyisocyanate composition>

A polyisocyanate composition of the present invention contains a polyurethane polyisocyanate (A1) which is a reaction product of a diisocyanate monomer and a polyol; and an isocyanate compound (A2) which is a reaction product of an aliphatic hydroxycarboxylic acid and a diisocyanate monomer.

### (Polyurethane polyisocyanate (A1))

For the diisocyanate monomers used for the synthesis of the polyurethane polyisocyanate (A1), one kind or two or more kinds selected from known aromatic, araliphatic, aliphatic, and cycloaliphatic diisocyanates, may be used in combination.

Examples of aromatic diisocyanates include 2,2'-diphenylmethane diisocyanate, 2,4'-diphenylmethane diisocyanate, 4,4'-diphenylmethane diisocyanate (also known as MDI), polymethylene polyphenyl polyisocyanate (also referred to as polymeric MDI or crude MDI), 1,3-phenylene diisocyanate, 4,4'-diphenyl diisocyanate, 1,4-phenylene diisocyanate (also known as PPDI), 2,4-toluene diisocyanate, 2,6-toluene diisocyanate (also known as TDI), 4,4'-toluidine diisocyanate, 2,4,6-triisocyanatotoluene, 1,3,5-triisocyanatobenzene, tolidine diisocyanate (also known as TODI), dianisidine diisocyanate, naphthalene diisocyanate (also known as NDI), 4,4'-diphenyl ether diisocyanate, and 4,4',4"-triphenylmethane triisocyanate, but are not limited to these.

An araliphatic diisocyanate refers to an aliphatic isocyanate having one or more aromatic ring in the molecule. Examples include m- or p-xylene diisocyanate (also known as XDI), and α,α,α',α'-tetramethylxylylene diisocyanate (also known as TMXDI), but are not limited to these.

Examples of aliphatic diisocyanate include trimethylene diisocyanate, tetramethylene diisocyanate, hexamethylene diisocyanate (also known as HDI), pentamethylene diisocyanate (also known as PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (also known as LDI), but are not limited to these.

Examples of cycloaliphatic diisocyanates include 3-isocyanatomethyl-3,5,5-trimethylcyclohexyl isocyanate, isophorone diisocyanate (also known as IPDI), 1,3-cyclopentanediisocyanate, 1,3-cyclohexanediisocyanate, 1,4-cyclohexanediisocyanate, methyl-2,4-cyclohexanediisocyanate, methyl-2,6-cyclohexanediisocyanate, 4,4'-methylene biscyclohexyl isocyanate (also known as hydrogenated MDI or HMDI), 1,3-bis(isocyanatomethyl)cyclohexane (also known as hydrogenated XDI or HXDI), hydrogenated TMXDI, norbornane diisocyanate (also known as NBDI), but are not limited to these.

As the polyols used for the synthesis of the polyurethane polyisocyanate (A1), conventionally known polyols can be used. Examples include glycols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol;
trifunctional or tetrafunctional aliphatic alcohols such as glycerin, trimethylolpropane, pentaerythritol;
bisphenols such as bisphenol A, bisphenol F, hydrogenated bisphenol A, hydrogenated bisphenol F;
dimer diols;
polyether polyols obtained by addition polymerization of alkylene oxides such as ethylene oxide, propylene oxide, butylene oxide, styrene oxide, epichlorohydrin, tetrahydrofuran, cyclohexylene oxide and the like in the presence of glycols, trifunctional or tetrafunctional aliphatic alcohols as polymerization initiators;
polyester polyols (1) which is a reaction product of polyesters obtained by ring-opening polymerization of cyclic ester compounds such as propiolactone, butyrolactone, ε-caprolactone, σ-valerolactone, β-methyl-σ-valerolactone, and polyvalent alcohols such as glycols, glycerin, trimethylolpropane, pentaerythritol;
polyester polyols (2) obtained by reaction of bifunctional polyols such as glycols, dimer diols or bisphenols with polyvalent carboxylic acids;
polyester polyols (3) obtained by reaction of trifunctional or tetrafunctional aliphatic alcohols with polyvalent carboxylic acids;
polyester polyols (4) obtained by reaction of bifunctional polyols, trifunctional or tetrafunctional aliphatic alcohols and polyvalent carboxylic acids;
polyester polyols (5) which are polymers of hydroxy acids such as dimethylolpropionic acid or castor oil fatty acids;
polyurethane polyols (1) obtained by polymerizing at least one selected from bifunctional polyols and trifunctional or tetrafunctional aliphatic alcohols with an isocyanate compound;
polyether urethane polyols (2) obtained by further polymerizing polyether polyols with an isocyanate compound;
polyester polyurethane polyols (3) obtained by polymerizing polyester polyols (1) to (5) with an isocyanate compound;
polyester-polyether polyurethane polyols (4) obtained by reacting at least one of polyester polyols (1) to (5) with a polyether polyol and an isocyanate compound;
castor oil-based polyols such as castor oil, dehydrated castor oil, hydrogenated castor oil, alkylene oxide adducts of castor oil in an amount of 5 to 50 moles, and mixtures thereof. One or more of these may be used in combination.

Examples of polyvalent carboxylic acids used for the synthesis of polyester polyols (2) to (4), include aromatic polybasic acids such as phthalic acid, terephthalic acid, isophthalic acid, phthalic anhydride, 1,4-naphthalenedicarboxylic acid, 2,5-naphthalenedicarboxylic acid, 2,6-naphthalenedicarboxylic acid, 2,3-naphthalenedicarboxylic acid anhydride, naphthalic acid, trimellitic acid, trimellitic anhydride, pyromellitic acid, pyromellitic anhydride, biphenyldicarboxylic acid, 1,2-bis(phenoxy)ethane-p,p'-dicarboxylic acid, benzophenone tetracarboxylic acid, benzophenone tetracarboxylic dianhydride, 5-sodium sulfoisophthalic acid, tetrachlorophthalic anhydride, tetrabromophthalic anhydride;
methyl esters of aromatic polybasic acids such as dimethyl terephthalate and 2,6-naphthalenedicarboxylic acid dimethyl;
aliphatic polybasic acids such as malonic acid, succinic acid, succinic anhydride, glutaric acid, adipic acid, pimelic acid, suberic acid, azelaic acid, sebacic acid, fumaric acid, maleic acid, maleic anhydride, itaconic acid, dimer acid;
alkyl esters of aliphatic polybasic acids such as dimethyl malonate, diethyl malonate, dimethyl succinate, dimethyl glutarate, dimethyl adipate, diethyl pimelate, diethyl suberate, dimethyl fumarate, diethyl fumarate, dimethyl maleate, diethyl maleate; and
cycloaliphatic polybasic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic anhydride, 4-methylhexahydrophthalic anhydride, hexahydrophthalic anhydride, cyclohexane-1,2,4-tricarboxylic acid-1,2-anhydride, himic anhydride, hettic anhydride. One or more of these may be used in combination.

As isocyanate compounds used for the synthesis of polyurethane polyols (1) to (4), the same diisocyanate monomers exemplified above for the synthesis of polyurethane polyol (A1) can be used.

The polyols preferably contain a polyol having three or more functional groups. The amount of the polyol having three or more functional groups can be appropriately adjusted, however, for example, it is preferably used in an amount such that the average number of functional groups of the polyols used for the synthesis of the polyurethane polyisocyanate (A1) is 2.1 or more and 3.5 or less, and more preferably 2.2 or more and 3.0 or less.

The polyurethane polyisocyanate (A1) can be obtained by reacting a diisocyanate monomer with a polyol under conditions in which isocyanate groups contained in the diisocyanate monomer are in excess relative to the active hydrogen groups contained in the polyol. The equivalent ratio of isocyanate groups to active hydrogen groups [NCO]/[active hydrogen groups] can be appropriately adjusted, for example, it is 2.0 or more and 20.0 or less.

Polyurethane polyisocyanate (A1) may contain unreacted diisocyanate monomers used in its synthesis, or the unreacted diisocyanate monomers may be removed by purification. When removing unreacted diisocyanate monomers, the degree of removal can be appropriately adjusted, for example, it is preferable to remove them until the content of the diisocyanate monomers is 0.1 % by mass or less in the polyisocyanate composition.

From the viewpoint of occupational health and safety, there has been a movement to regulate the use of isocyanate monomers, and the European Commission has adopted REACH regulations prohibiting the marketing of products containing 0.1 % by mass or more of isocyanate monomers unless certain requirements are met. By removing unreacted diisocyanate monomers until the content of the diisocyanate monomer in the polyisocyanate composition is 0.1 % by mass or less, products meeting such requirements can be obtained.

Further, when producing laminates for food packaging using a two-part curable adhesive containing an aromatic isocyanate prepolymer, unreacted aromatic isocyanate monomers may remain in the adhesive layer. The isocyanate monomers can react with water present in the surroundings to form primary aromatic amines (PAA), which may elute into the contents (food) through the film. PAA is of concern due to the potential harmful effects on human health, and various regulations have been established, for example, the European Commission has determined its detection limits in regulations on plastic materials and products which are intended to come into contact with food.

The concentration of PAA gradually decreases even when the aromatic isocyanates remain in the adhesive layer, since PAA reacts with unreacted aromatic isocyanates present in the surroundings. Although it eventually decreases to below the detection limit, it is preferable that the initial content of aromatic isocyanate monomers remaining in the adhesive layer is low, from the viewpoint of production efficiency of laminate films for food packaging. By removing the diisocyanate monomers in advance, a two-part curable adhesive superior in production efficiency can be obtained.

The removal of diisocyanate monomers can be performed by distilling the diisocyanate monomers under reduced pressure using a short-path distillation apparatus, a thin-film distillation apparatus, or the like. The degree of vacuum and the distillation temperature can be appropriately adjusted depending on the diisocyanate monomers to be removed; for example, the degree of vacuum may be 0.1 mbar or less, and the distillation temperature may be 120 °C to 190 °C. The removal process of the diisocyanate monomers may be performed multiple times.

The content of the diisocyanate monomer can be measured, for example, in accordance with ASTM D 3432, by gas chromatography using an internal standard. Alternatively, it can also be measured by liquid chromatography under the conditions described below.
Apparatus: "ACQUITY UPLC H-Class" manufactured by Waters Corporation
Data processing: "Empower-3" manufactured by Waters Corporation
Column: "ACQUITY UPLC HSS T3"(100 mm × 2.1 mmφ, 1.8 µm; manufactured by Waters Corporation), 40 °C
Eluent: Ammonium formate aqueous solutioin / methanol, 0.3 mL/min
Detector: PDA
Sample preparation:
   1: Dissolving 100 mg of the appropriately blocked sample in 10 mL of THF (LC grade),
   2: Stirring with a vortex mixer for 30 seconds,
   3: Appropriately diluting with the eluent (mobile phase),
   4: Passing through a 0.2 µm filtration filter to obtain a measurement sample.
Calculation of area ration: Calculated using the maximum absorption wavelength with respect to the target

### (Isocyanate compound (A2))

The isocyanate compound (A2) is a reaction product of an aliphatic hydroxycarboxyl acid and a diisocyanate. As the diisocyanate used for synthesizing the isocyanate compound (A2), the same types as those exemplified as usable for synthesizing the polyurethane polyisocyanate (A1) can be used. It is preferable to use an aliphatic hydroxycarboxylic acid having a melting point of 80 °C or lower.

As the aliphatic hydroxycarboxylic acid, those conventionally known may be used and are not particularly limited. Examples include glycolic acid, lactic acid, glyceric acid, hydroxybutyric acid, tartronic acid, malic acid, tartaric acid, citric acid, dimethylolpropionic acid, dimethylolbutyric acid, ricinoleic acid, 12-hydroxystearic acid, and one kind or two or more kinds of these may be used in combination. The use of ricinoleic acid is preferred.

The isocyanate compound (A2) may contain the compound (A2-1) having an isocyanate group in which an aliphatic hydroxycarboxylic acid is bonded to only one terminal of a diisocyanate, and a compound (A2-2) in which an aliphatic hydroxycarboxylic acid is bonded to both terminals of a diisocyanate. It is preferable that the isocyanate compound (A2) contains 50 % by mass or more of the compound (A2-1), and more preferably 80 % by mass or more. The whole of the isocyanate compound (A2) may be the compound (A2-1).

Such an isocyanate compound (A2-1) can be obtained, for example, by reacting diisocyanate monomer and aliphatic hydroxycarboxylic acid under conditions in which the isocyanate groups contained in the diisocyanate monomer are present in excess relative to the hydroxy groups contained in the aliphatic hydroxycarboxylic acid, thereby obtaining a composition containing the isocyanate compound (A2) and unreacted diisocyanate monomer, and removing the unreacted diisocyanate monomer as necessary. The equivalent ratio of isocyanate groups to hydroxyl groups [NCO]/[hydroxyl group] may be appropriately adjusted, and for example, may be 2.0 or more and 20.0 or less. The unreacted diisocyanate monomer can be removed by methods and under conditions similar to those used for the synthesis of the polyurethane polyisocyanate (A1). As with the polyurethane polyisocyanate (A1), it is preferable to perform the removal step until the amount of diisocyanate monomer in the isocyanate compound (A2) is reduced to 0.1 % by mass or less.

The content of the isocyanate compound (A2) may be appropriately adjusted, and for example, it is preferably 0.05 % by mass or more and 10 % by mass or less of the total amount of the polyurethane polyisocyanate (A1) and the isocyanate compound (A2), and more preferably 0.1 % by mass or more and 3 % by mass or less.

### (Isocyanate Compound (A3))

The polyisocyanate composition of the present invention may contain an isocyanate compound (A3) other than the polyurethane polyisocyanate (A1) and the isocyanate compound (A2). Examples of the polyisocyanate compound (A3) include biuret, nurate, allophanate, carbodiimide-modified products, or uretidione-modified products of at least one diisocyanate selected from aromatic diisocyanates, araliphatic diisocyanates, aliphatic diisocyanates, and alicyclic diisocyanates. The polyisocyanate compound (A3) may be used alone or in combination of two or more kinds.

The aromatic diisocyanates, araliphatic diisocyanates, aliphatic diisocyanates, and alicyclic diisocyanates may be the same diisocyanate monomers as those exemplified as raw materials for the polyurethane polyisocyanate (A1).

When the content of the diisocyanate monomer in the polyisocyanate composition of the present invention is set to 0.1 % by mass or less, it is preferable that the isocyanate compound (A3) also have a diisocyanate monomer content of 0.1 % by mass or less.

When the polyisocyanate composition of the present invention contains the isocyanate compound (A3), its content may be appropriately adjusted and is, as one example, from 10 % by mass or more and 90 % by mass or less of the total amount of the polyurethane polyisocyanate (A1), the isocyanate compound (A2), and the isocyanate compound (A3).

The polyisocyanate composition of the present invention may contain an organic solvent or may be free of an organic solvent. Examples of the organic solvents that may be contained in the polyisocyanate composition of the present invention include esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide; and dimethyl sulfonamide.

The polyisocyanate composition of the present invention may contain any optional component as long as it does not impair the objects of the present invention.

### <Two-part curable composition>

The polyisocyanate composition of the present invention can be used as a two-part curable composition in combination with an isocyanate-reactive composition containing a compound having reactivity with isocyanates. Examples of the compounds having reactivity with isocyanates include polyether polyols, polyester polyols, polyester polyether polyols, polyurethane polyols, polyester polyurethane polyols, polyether polyurethane polyols, vegetable-oil-based polyols, sugar alcohols, polycarbonate polyols, acrylic polyols, hydroxyl-containing olefin resins, hydroxyl-containing fluororesins, and (poly)alkanolamines.

Such a two-part curable composition can be used, for example, as adhesives, coatings, sealants, elastomers, and the like.

Since the two-part curable compositions of the present invention are superior in adhesion to metal base materials, they are suitably used for such applications, however, they are not limited thereto.

### <Adhesives>

The polyisocyanate composition of the present invention can be suitably used as one component of a two-part curable adhesive. The two-part curable adhesive of the present invention contains a polyisocyanate composition (X) and a polyol composition (Y).

### (Polyisocyanate composition (X))

The polyisocyanate composition (X) contains the polyisocyanate composition described above and may contain other components, as necessary.

When the adhesive of the present invention is used as a solvent-free two-part curable adhesive, the viscosity of the polyisocyanate composition (X) is adjusted to a range suitable for a non-solvent laminating method. As one example, the viscosity at 40 °C is adjusted to be in the range of 100 to 50,000 mPa·s, and more preferably 500 to 20,000 mPa·s. The viscosity of the polyisocyanate composition (X) can be adjusted, for example, by regulating the structure of the polyurethane polyisocyanate (A1) (the polyol used) or by using the polyisocyanate compound (A3) in combination. The viscosity of the polyisocyanate composition (X) can be measured, for example, using a rotational viscometer under the following conditions: cone-plate geometry of 1° × 50 mm diameter, shear rate of 100 sec⁻¹, and a temperature of 40 °C ± 1 °C.

When the adhesive of the present invention is used as a solvent-based two-part curable adhesive, the viscosity of the polyisocyanate composition (X) can be adjusted to a viscosity suitable for coating by diluting it with an organic solvent.

### (Polyol composition (Y))

The polyol composition (Y) contains a polyol compound (B). The polyol compound (B) is not particularly limited, and any polyol compound commonly used in urethane-reactive two-part curable adhesives can be used.

Specific examples of the polyol compound (B) include, for example, polyether polyols (B1), polyols having a tertiary amino group (B2), polyester polyols (B3), polyester polyether polyols (B4), polyurethane polyols (B5), polyester polyurethane polyols (B6), polyether polyurethane polyols (B7), vegetable-oil-based polyols (B8), sugar alcohols (B9), polycarbonate polyols (B10), acrylic polyols (B11), hydroxyl-containing olefin resins (B12), and hydroxyl-containing fluororesins (B13).

Examples of the polyether polyol (B1) include those obtained by addition-polymerizing an alkylene oxide such as ethylene oxide, propylene oxide, butylene oxide, styrene oxide, epichlorohydrin, tetrahydrofuran, or cyclohexene in the presence of a polymerization initiator such as glycols including ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bis(hydroxyethoxy)benzene, 1,4-cyclohexanediol, 1,4-cyclohexanedimethanol, and triethylene glycol; and aliphatic alcohols having three or four functional hydroxyl groups including glycerin, trimethylolpropane, pentaerythritol, or the triol form of polypropylene glycol.

Examples of the polyol (B2) having a tertiary amino group include those obtained by addition-polymerizing an alkylene oxide such as ethylene oxide, propylene oxide, butylene oxide, styrene oxide, epichlorohydrin, tetrahydrofuran, or cyclohexene in the presence of an amine compound having an active hydrogen atom as a polymerization initiator. The amine compound may be any conventionally known one, and examples include primary or secondary alkylamines such as ethylamine and diethylamine; amine compounds having a plurality of amino groups such as methylenediamine and ethylenediamine; and primary or secondary alkanolamines such as monoethanolamine and diethanolamine.

Specific examples of the polyol (B2) having such a tertiary amino group include , for example, polypropylene glycol ethylenediamine ether, tri(1,2-polypropylene glycol)amine, N-ethyldiethanolamine, N-methyl-N-hydroxyethyl-N-hydroxyethoxyethylamine, pentakis(hydroxypropyl)diethylenetriamine, and tetrakis(hydroxypropyl)ethylenediamine, but it is not limited to these. The polyol (B2) having such a tertiary amino group, may be used one kind or in combination of two or more kinds. The polyol (B2) having such a tertiary amino group is preferably those having secondary hydroxyl groups.

The polyester polyol (B3) is a reaction product of a polyhydric alcohol and a polycarboxylic acid. The polyhydric alcohols used for the synthesis of the polyester polyol may be diols or polyol with three or more functional groups. A polyester polyether polyol obtained by using the above polyether polyol as the diol, or a polyester-polyurethane polyol obtained by using the polyurethane polyol described later, may also be used.

Examples of the diols include aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol;
ether glycols such as polyoxyethylene glycol and polyoxypropylene glycol;
modified polyether diols obtained by ring-opening polymerization of an aliphatic diol with various cyclic ether-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;
lactone-based polyester polyols obtained by polycondensation of an aliphatic diol with various lactones such as lactonoids or ε-caprolactone;
bisphenols such as bisphenol A and bisphenol F; and
alkylene oxide adducts of bisphenols obtained by adding ethylene oxide, propylene oxide, or the like to bisphenols such as bisphenol A, and bisphenol F.

Examples of the polyols having three or more functional groups include aliphatic polyols such as trimethylolethane, trimethylolpropane, glycerin, hexanetriol, and pentaerythritol;
modified polyether polyols obtained by ring-opening polymerization of an aliphatic polyol with various cyclic ether-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by polycondensation of an aliphatic polyol with various lactones such as ε-caprolactone.

Examples of the polycarboxylic acids used for the synthesis of the polyester polyol (B3) include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as ortho-phthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or aromatic dicarboxylic acids; polybasic acids such as p-hydroxybenzoic acid, p-(2-hydroxyethoxy)benzoic acid and ester-forming derivatives of these dihydroxycarboxylic acids, and dimer acids.

The polyurethane polyol (B5) is a reaction product of a low-molecular-weight or high-molecular-weight polyol with a polyisocyanate compound. Examples of the low-molecular-weight polyols include those similar to the polyhydric alcohols exemplified as raw materials for the polyester polyol. Examples of the high-molecular-weight polyols include polyether polyols and polyester polyols. Examples of the polyisocyanate compounds include those exemplified as the diisocyanate monomer (1) and those exemplified as the polyisocyanate compound (A2).

Examples of the vegetable oil polyols (B8) include castor oil, dehydrated castor oil, hardened castor oil obtained by hydrogenating castor oil, and alkylene oxide adducts of castor oil containing 5 to 50 moles of alkylene oxide.

Examples of the sugar alcohols (B9) include pentaerythritol, sucrose, xylitol, sorbitol, isomalt, lactitol, maltitol, and mannitol sugar.

The adhesive of the present invention can be suitably used for producing laminate materials for packaging, such as those used for food packaging. When the adhesive of the present invention is used for such applications, it is preferable that the polyol compound (B) include at least one selected from polyether polyols (B1), polyols (B2) having a tertiary amino group, polyester polyols (B3), polyester-polyether polyols (B4), polyurethane polyols (B5), polyester-polyurethane polyols (B6), polyether-polyurethane polyols (B7), vegetable oil polyols (B8), and sugar alcohols (B9).

The content of these polyol compounds (B) can be appropriately adjusted depending on the purpose, but as one example, it is 50 % by mass or more based on the solid content of the polyol composition (Y).

The hydroxyl value of the polyol compound (B) can be appropriately adjusted, but as one example, it is 1 mgKOH/g or more and 300 mgKOH/g or less. When the adhesive of the present invention is used as a solvent-free adhesive, it is preferable that the hydroxyl value of the polyol compound (B) be 20 mgKOH/g or more and 300 mgKOH/g or less.

When the adhesive of the present invention is used as a solvent-based adhesive, it is preferable that the hydroxyl value of the polyol compound (B) be 1 mgKOH/g or more and 50 mgKOH/g or less. The hydroxyl value of the polyol compound (B) can be calculated from the average number of functional groups and the molecular weight of the polyol compound.

### (Amine compound (C))

The polyol composition (Y) may contain an amine compound (C) having an amino group. In the present description, the "amino group" refers to an NH₂ group or an NHR group (where R is an alkyl group or an aryl group which may have a functional group).

As the amine compound (C), any known compound may be used without particular limitation. Examples include methylenediamine, ethylenediamine, isophoronediamine, 3,9-dipropaneamine-2,4,8,10-tetraoxaspirodeundecane, lysine, 2,2,4-trimethylhexamethylenediamine, hydrazine, piperazine, 2-hydroxyethyl ethylenediamine, di(2-hydroxyethyl)ethylenediamine, di(2-hydroxyethyl)propylenediamine, 2-hydroxypropyl ethylenediamine, di(2-hydroxypropyl)ethylenediamine, poly(propylene glycol) diamine, poly(propylene glycol) triamine, poly(propylene glycol) tetramine, 1,2-diaminopropane, 1,3-diaminopropane;
1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylenetriamine, 1,4-cyclohexanediamine, 4,4'-methylenebis(cyclohexylamine), 4,4'-isopropylidenebis(cyclohexylamine), norbornanediamine;
bis(aminomethyl)cyclohexane, diaminodicyclohexylmethane, isophoronediamine, menthenediamine, bis(cyanoethyl)diethylenetriamine, 1,4-bis(8-aminopropyl)piperazine, piperazine-1,4-diazacycloheptane, 1-(2'-aminoethyl)piperazine, 1-[2'-(2"-aminoethylamino)ethyl]piperazine, tricyclodecanediamine, and polyurea amines which are reaction products of the above-described polyamines with the above-described isocyanate components, all of which are amine compounds (C1) having a plurality of amino groups;
primary or secondary alkanolamines (C2) such as monoethanolamine, monoisopropanolamine, monobutanolamine, N-methylethanolamine, N-ethylethanolamine, N-methylpropanolamine, diethanolamine, and diisopropanolamine; and
primary or secondary amines (C3) such as ethylamine, octylamine, laurylamine, myristylamine, stearylamine, oleylamine, diethylamine, dibutylamine, and distearylamine.

It is preferable that the blending amount of the amine compound (C) be adjusted such that the amine value of the polyol composition (Y) becomes from 20 to 70 mgKOH/g, and more preferably from 25 to 50 mgKOH/g.

In the present description, the amine value means the number of milligrams of KOH equivalent to the amount of HCl required to neutralize 1 g of a sample. The amine value is not particularly limited and can be calculated by known methods. When the chemical structure of the amine compound (C) and, if necessary, its average molecular weight are known, the amine value can be calculated from (number of amino groups per molecule / average molecular weight) × 56.1 × 1000. When the chemical structure, average molecular weight, or the like of the amine compound is unknown, the amine value may be measured by a known method, for example, in accordance with JIS K 7237-1995.

### (Monool compound (D))

The polyol composition (Y) may contain a monool compound (D) having one alcoholic hydroxyl group. The main chain of the monool compound (D) is not particularly limited, and examples include vinyl resins, acrylic resins, polyesters, epoxy resins, and urethane resins each having one hydroxyl group. Aliphatic alcohols and alkyl alkylene glycols may also be used. The main chain of the monool compound (D) may be linear or branched. The position at which the hydroxyl group is bonded is also not particularly limited, but it is preferably present at the terminal end of the molecular chain.

Examples of the monool compound (D) include aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, other alkanols (C20-50), oleyl alcohol, and isomers thereof;
alicyclic monools such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanols, dicyclohexylmethanol, decatol, 2-cyclohexylcyclohexanol, 4-cyclohexylcyclohexanol, 4-(4-propylcyclohexyl)cyclohexanol, 4-(4-pentylcyclohexyl)cyclohexanol, α-ambrinol, desoxycorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methandienone, cortisone acetate, stenolon, and isomers thereof;
aromatic aliphatic monools such as benzyl alcohol; and
polyoxyalkylene monools obtained by ring-opening addition polymerization of alkylene oxides such as ethylene oxide, propylene oxide, butylene oxide, and tetrahydrofuran, using as an initiator an alkyl compound containing one active hydrogen.

When the two-part curable adhesive of the present invention is used as a solvent-free adhesive, the viscosity of the polyol composition (Y) is adjusted to a range suitable for a non-solvent laminating method. As one example, it is adjusted so that the viscosity at 40 °C becomes 100 to 50,000 mPa·s, and more preferably from 100 to 20,000 mPa·s. The viscosity of the polyol composition (Y) can be adjusted by the backbone of the polyol compound (B) or by plasticizers described later. When the viscosity is adjusted by the backbone of the polyol compound (B), for example, the viscosity can be lowered by using polypropylene glycol or a polyester polyol obtained by the reaction of an aliphatic carboxylic acid with a polyol. Alternatively, the viscosity can be increased by using a polyester polyol obtained by the reaction of an aromatic carboxylic acid with a polyol.

### (Other components of the adhesive)

The two-part curable adhesive of the present invention may contain components other than those described above. Such other components may be contained in either or both of the polyisocyanate composition (X) and the polyol composition (Y), or they may be prepared separately and mixed together with the polyisocyanate composition (X) and the polyol composition (Y) immediately before coating the adhesive. The respective components are described below.

### (Catalyst)

Examples of the catalysts include metal catalysts, amine catalysts, aliphatic cyclic amide compounds, and quaternary ammonium salts.

Examples of the metal catalysts include metal complex catalysts, inorganic metal catalysts, and organometallic catalysts.

Examples of the metal complex catalysts include acetylacetonate salts of metals selected from Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconium acetylacetonate.

Examples of the inorganic metal catalysts include those selected from Sn, Fe, Mn, Cu, Zr, Th, Ti, Al, and Co.

Examples of the organometallic catalysts include organic zinc compounds such as zinc octoate, zinc neodecanoate, and zinc naphthenate; organic tin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organic nickel compounds such as nickel octoate and nickel naphthenate; organic cobalt compounds such as cobalt octoate and cobalt naphthenate; organic bismuth compounds such as bismuth octoate, bismuth neodecanoate, and bismuth naphthenate; and titanium compounds such as tetraisopropyloxytitanate, dibutyl titanium dichloride, tetrabutyltitanate, butoxytitanium trichloride, and titanium chelate complexes having at least one ligand selected from aliphatic diketones, aromatic diketones, and alcohols having 2 to 10 carbon atoms.

Examples of the amine catalysts include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N''-pentamethyldiethylenetriamine, N,N,N',N",N"-pentamethyl(3-aminopropyl)ethylenediamine, N,N,N',N",N"-pentamethyldipropylenetriamine, N,N,N',N'-tetramethylhexamethylenediamine, bis(2-dimethylaminoethyl) ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-s-triazine, 1,8-diazabicyclo[5.4.0]undec-7-ene, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compounds include δ-valerolactam, ε-caprolactam, ω-enantholactam, η-capryllactam, and β-propiolactam. Among these, ε-caprolactam is particularly effective for promoting curing.

Examples of the quaternary ammonium salts include hydroxy salts, alkyl acid salts, and halide salts of alkyl ammonium and aromatic ammonium. Specific examples include tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide, but the present invention is not limited to these.

### (Acid anhydrides)

Examples of the acid anhydrides include alicyclic aliphatic acid anhydrides, aromatic acid anhydrides, and unsaturated carboxylic acid anhydrides, and one kind or two or more kinds of these may be used in combination. More specific examples include maleic anhydride, phthalic anhydride, trimellitic anhydride, pyromellitic anhydride, benzophenonetetracarboxylic anhydride, dodecenylsuccinic anhydride, polyadipic anhydride, polyazelaic anhydride, polysebacic anhydride, poly(ethyloctadecanedioic acid) anhydride, poly(phenylhexadecanedioic acid) anhydride, tetrahydrophthalic anhydride, methyl tetrahydrophthalic anhydride, methylhexahydrophthalic anhydride, hexahydrophthalic anhydride, methyl himic anhydride, trialkyltetrahydrophthalic anhydride, methylcyclohexenedicarboxylic anhydride, methylcyclohexenetetracarboxylic anhydride, ethylene glycol bis(trimellite) dianhydride, hettic anhydride, nadic anhydride, methylnadic anhydride, 5-(2,5-dioxotetrahydro-3-furanyl)-3-methyl-3-cyclohexane-1,2-dicarboxylic dianhydride, 3,4-dicarboxy-1,2,3,4-tetrahydro-1-naphthalene succinic dianhydride, and 1-methyl-dicarboxy-1,2,3,4-tetrahydro-1-naphthalene succinic dianhydride.

Alternatively, modified acid anhydrides obtained by modifying the above-mentioned compounds with glycols may also be used as the acid anhydride. Examples of the glycols that can be used for the modification include alkylene glycols such as ethylene glycol, propylene glycol, and neopentyl glycol; polyether glycols such as polyethylene glycol, polypropylene glycol, and polytetramethylene ether glycol. Furthermore, a copolymeric polyether glycol of two or more of these glycols and/or polyether glycols may also be used.

Alternatively, a homopolymer or copolymer of a compound having a polymerizable unsaturated group, such as maleic anhydride among the above-mentioned compounds, may be used as the acid anhydride. Examples of compounds capable of copolymerizing with a compound having both an acid anhydride group and a polymerizable unsaturated group include α-olefins such as ethylene, propylene, 1,3-butadiene, and cyclopentylethylene; (meth)acrylic monomers such as (meth)acrylic acid and (meth)acrylic acid esters; vinyl compounds having an aromatic ring such as styrene, 1-ethynyl-4-methylbenzene, divinylbenzene, 1-ethynyl-4-methylethylbenzene, benzonitrile, acrylonitrile, p-tert-butylstyrene, 4-vinylbiphenyl, 4-ethynylbenzyl alcohol, 2-ethynylnaphthalene, and phenanthrene-9-ethynyl; and fluoroolefins such as vinylidene fluoride, tetrafluoroethylene, hexafluoropropylene, and chlorotrifluoroethylene. One or two or more of these may be used in combination. It is preferable to use styrene or p-tert-butylstyrene, which are vinyl compounds having an aromatic ring.

### (Coupling agents)

Examples of the coupling agents include silane coupling agents, titanate coupling agents, and aluminum-based coupling agents.

Examples of the silane coupling agents include amino silanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, bis[3-(trimethoxysilyl)propyl]amine, and bis[3-(triethoxysilyl)propyl]amine; epoxy silanes such as β-(3,4-epoxycyclohexyl)ethyltrimethoxysilane, γ-glycidoxypropyltrimethoxysilane, and γ-glycidoxypropyltriethoxysilane; vinyl silanes such as vinyltris(β-methoxyethoxy)silane, vinyltriethoxysilane, vinyltrimethoxysilane, and γ-methacryloxypropyltrimethoxysilane; and hexamethyldisilazane and γ-mercaptopropyltrimethoxysilane.

Examples of the titanate coupling agents include tetraisopropoxytitanium, tetra-n-butoxytitanium, butyl titanate dimer, tetrastearyltitanate, titanium acetylacetonate, titanium lactate, tetraoctylene glycol titanate, titanium lactate, and tetrastearyloxytitanium.

Examples of the aluminum-based coupling agents include, for example, acetoalkoxyaluminum diisopropylate.

### (Pigments)

Examples of the pigments are not particularly limited, and may include organic and inorganic pigments such as extender pigments, white pigments, black pigments, gray pigments, red pigments, brown pigments, green pigments, blue pigments, metallic pigments, luminescent pigments, and pearlescent pigments described in the 1970 edition of the Paint Raw Materials Handbook (Japan Paint Manufacturers Association), and plastic pigments.

Examples of the extender pigments include precipitated barium sulfate, whiting, precipitated calcium carbonate, heavy calcium carbonate, gypsum, alumina white, silica, hydrated silica fine powder (white carbon), ultrafine anhydrous silica (Aerosil), silica sand, talc, precipitated magnesium carbonate, bentonite, clay, kaolin, and ocher.

Examples of the organic pigments include various insoluble azo pigments such as Benzidine Yellow, Hansa Yellow, and Lakid 4R; various soluble azo pigments such as Lakid C, Carmine 6B, and Bordeaux 10; various (copper) phthalocyanine pigments such as phthalocyanine blue and phthalocyanine green; various lake pigments obtained by dye adsorption such as Rhodamine Lake and Methyl Violet Lake; various mordant dye pigments such as Quinoline Lake and Fast Sky Blue; various vat dye pigments such as anthraquinone pigments, thioindigo pigments, and perinone pigments; various quinacridone pigments such as Sincasia Red B; various dioxazine pigments such as Dioxazine Violet; various condensed azo pigments such as Chromophtal pigments; and aniline black.

Examples of the inorganic pigments include various chromates such as chrome yellow, zinc chromate, and molybdate orange; various ferrocyanide compounds such as Prussian blue; various metal oxides such as titanium oxide, zinc oxide, Mapico Yellow, iron oxide, Bengal red, chromium oxide green, and zirconium oxide; various sulfides or selenides such as cadmium yellow, cadmium red, and mercuric sulfide; various sulfates such as barium sulfate and lead sulfate; various silicates such as calcium silicate and ultramarine; various carbonates such as calcium carbonate and magnesium carbonate; various phosphates such as cobalt violet and manganese violet; various metal powder pigments such as aluminum powder, gold powder, silver powder, copper powder, bronze powder, and brass powder; flake pigments of these metals, mica flake pigments; metallic and pearl pigments such as mica flake pigments coated with metal oxides and plate-like iron oxide pigments; and graphite and carbon black.

Examples of the plastic pigments include, for example, "Grandol PP-1000" and "PP-2000S" manufactured by DIC Corporation.

The pigments to be used may be appropriately selected depending on the purpose. For example, from the viewpoints of durability, weather resistance, and design properties, it is preferable to use inorganic oxides such as titanium oxide and zinc oxide as white pigments, and it is preferable to use carbon black as the black pigments.

The blending amount of the pigments is, as one example, 1 to 400 parts by mass relative to 100 parts by mass of the total nonvolatile content of the polyol composition (X) and the polyisocyanate composition (Y), and more preferably 10 to 300 parts by mass in order to improve adhesion and blocking resistance.

### (Plasticizer)

Examples of the plasticizer include phthalate plasticizers, fatty acid plasticizers, aromatic polycarboxylic acid plasticizers, phosphate plasticizers, polyol plasticizers, epoxy plasticizers, polyester plasticizers, and carbonate plasticizers.

Examples of the phthalate plasticizers include phthalate ester plasticizers such as dimethyl phthalate, diethyl phthalate, dibutyl phthalate, diisobutyl phthalate, dihexyl phthalate, diheptyl phthalate, di(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyl decyl phthalate, dimethyl isophthalate, di(2-ethylhexyl) isophthalate, and diisooctyl isophthalate; and tetrahydrophthalate ester plasticizers such as di(2-ethylhexyl) tetrahydrophthalate, di-n-octyl tetrahydrophthalate, and diisodecyl tetrahydrophthalate.

Examples of the fatty acid based plasticizers include adipate plasticizers such as din-butyl adipate, di(2-ethylhexyl) adipate, diisodecyl adipate, diisononyl adipate, di(C6-C10 alkyl) adipates, dibutyl diglycol adipate; azelate plasticizers such as di-n-hexyl azelate, di(2-ethylhexyl) azelate, and diisooctyl azelate; sebacate plasticizers such as di-n-butyl sebacate, di(2-ethylhexyl) sebacate, and diisononyl sebacate; maleate plasticizers such as dimethyl maleate, diethyl maleate, di-n-butyl maleate, and di(2-ethylhexyl) maleate; fumarate plasticizers such as di-n-butyl fumarate and di(2-ethylhexyl) fumarate; itaconate plasticizers such as monomethyl itaconate, monobutyl itaconate, dimethyl itaconate, diethyl itaconate, dibutyl itaconate, and di(2-ethylhexyl) itaconate; stearate plasticizers such as n-butyl stearate, glycerol monostearate, and diethylene glycol distearate; oleate plasticizers such as butyl oleate, glyceryl monooleate, and diethylene glycol monooleate; citrate plasticizers such as triethyl citrate, tri-n-butyl citrate, acetyltriethyl citrate, acetyltributyl citrate, and acetyltri(2-ethylhexyl) citrate; ricinoleate plasticizers such as methyl acetylricinoleate, butyl acetylricinoleate, glyceryl monoricinoleate, and diethylene glycol monoricinoleate; and other fatty-acid-based plasticizers such as diethylene glycol monolaurate, diethylene glycol diperargonate, and pentaerythritol fatty acid esters.

Examples of the aromatic polycarboxylic-acid-based plasticizers include trimellitate plasticizers such as tri-n-hexyl trimellitate, tri(2-ethylhexyl) trimellitate, tri-n-octyl trimellitate, triisooctyl trimellitate, triisononyl trimellitate, tridecyl trimellitate, and triisodecyl trimellitate; and pyromellitate plasticizers such as tetra(2-ethylhexyl) pyromellitate and tetra-n-octyl pyromellitate.

Examples of the phosphate plasticizers include triethyl phosphate, tributyl phosphate, tri(2-ethylhexyl) phosphate, tributoxyethyl phosphate, triphenyl phosphate, octyldiphenyl phosphate, cresyldiphenyl phosphate, cresylphenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol plasticizers include glycol-based plasticizers such as diethylene glycol dibenzoate, dipropylene glycol dibenzoate, triethylene glycol dibenzoate, triethylene glycol di(2-ethylbutyrate), triethylene glycol di(2-ethylhexanoate), and dibutyl methylenebisthioglycolate; and glycerin-based plasticizers such as glycerol monoacetate, glycerol triacetate, and glycerol tributyrate.

Examples of the epoxy plasticizers include epoxidized soybean oil, epoxy butyl stearate, bis(2-ethylhexyl) epoxy hexahydrophthalate, bis(isodecyl) epoxy hexahydrophthalate, epoxy triglyceride, epoxidized octyl oleate, and epoxidized decyl oleate.

Examples of the polyester plasticizers include adipate polyester plasticizers, sebacate polyester plasticizers, and phthalate polyester plasticizers.

Examples of the carbonate plasticizers include propylene carbonate and ethylene carbonate.

In addition, examples of other plasticizers include partially hydrogenated terphenyl, tackifier plasticizers, and polymerizable plasticizers such as diallyl phthalate and acrylic monomers or oligomers. These plasticizers may be used alone or in combination of two or more kinds.

### (Phosphoric compounds)

Examples of the phosphoric compounds include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphates.

### (Form of the adhesive)

The two-part curable adhesive of the present invention may be a solvent-based form or a solvent-free form. In the present invention, the "solvent-based" adhesive refers to a form used in a so-called dry-laminating method in which, after adhesive is applied to a substrate, the coated film is heated in an oven or the like to volatilize the organic solvent in the film, and another base material is laminated thereto. One or both of the polyisocyanate composition (X) and the polyol composition (Y) contain an organic solvent capable of dissolving (or diluting) the constituent components of the polyisocyanate composition (X), and the polyol composition (Y) used in the present invention.

Examples of the organic solvents include esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; and dimethyl sulfoxide and dimethyl sulfonamide. The organic solvents used as reaction media in the production of the constituent components of the polyisocyanate composition (X) and the polyol composition (Y) may also be used as diluents during coating.

In the present description, the term "solvent-free" adhesive refers to an adhesive form used in a so-called nonsolvent laminating method, in which the polyisocyanate composition (X) and the polyol composition (Y) substantially contain no highly soluble organic solvents such as esters including ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; and dimethyl sulfoxide and dimethyl sulfonamide, and particularly contain no ethyl acetate or methyl ethyl ketone, and in which, after the adhesive is applied to a base material, no heating step in an oven or the like is required to volatilize the solvent before laminating another base material. When an organic solvent used as a reaction medium in the production of the constituent components of the polyisocyanate composition (X) or the polyol composition (Y) or the raw materials thereof cannot be completely removed and trace amounts of the organic solvent remain in the polyisocyanate composition (X) or the polyol composition (Y), such compositions are interpreted as substantially containing no organic solvent. In addition, when the polyol composition (Y) contains a low-molecular-weight alcohol, the low-molecular-weight alcohol reacts with the polyisocyanate composition (X) and becomes part of the coating film, and therefore does not need to be volatilized after coating. Accordingly, such a form is also treated as a solvent-free adhesive, and the low-molecular-weight alcohol is not regarded as an organic solvent.

A decrease in adhesion between the adhesive layer and a metal foil or a metal-deposited film over time tends to occur when the adhesive is solvent-free. Accordingly, the present invention exhibits its effect more remarkably when the adhesive is solvent-free.

The two-curable adhesive is preferably used by blending so that the ratio [NCO] / [OH] of the molar amount of isocyanate groups [NCO] contained in the polyisocyanate composition (X) to the molar amount of hydroxyl groups [OH] contained in the polyol composition (Y), is 0.5 to 5.0, more preferably 1.0 to 3.0. According to this, appropriate curability can be obtained without depending on the ambient humidity during coating.

### <Laminate>

The laminated body of the present invention may be obtained, for example, by a method including a two-part mixing step in which the polyisocyanate composition (X) and the polyol composition (Y) are preliminarily mixed, applied to a first base material, and then a second base material is laminated onto the applied surface, followed by curing of the adhesive layer; or by a method including a two-part separate-coating step in which the polyisocyanate composition (X) and the polyol composition (Y) are separately applied to a first base material and a second base material, respectively, the applied surfaces are then brought into contact with each other and pressed together to laminate the first and second base materials, and the adhesive layer is subsequently cured. The films to be used are not particularly limited, and an appropriate film may be selected depending on the intended application.

Examples of the films for use in food packaging include polyethylene terephthalate (PET) films, polystyrene films, polyamide films, polyacrylonitrile films, and polyethylene films (LLDPE: linear low-density polyethylene films; HDPE: high-density polyethylene films; MDOPE: monoaxially oriented polyethylene films; OPE: biaxially oriented polyethylene films); polypropylene films (CPP: non-oriented polypropylene films; OPP: biaxially oriented polypropylene films); polyolefin films such as gas-barrier heat-seal films in which an olefin-based heat-sealing resin layer is provided on one or both surfaces of a resin having gas-barrier properties such as an ethylene-vinyl alcohol copolymer or polyvinyl alcohol; polyvinyl alcohol films; and ethylene-vinyl alcohol copolymer films.

It is also preferable to use biomass films, biodegradable films, or a recycled plastic films formed from materials containing biomass-derived components, biodegradable components, or recycled components.

Biomass films, biodegradable films, and recycled plastic films are commercially available from various manufacturers. Examples include film sheets listed in the biomass-certified product list published by the Japan Organics Recycling Association; films listed in the Eco Mark certified product list published by the Japan Environment Association; and films bearing the symbol mark established by the Japan BioPlastics Association. Films certified in various countries may also be used.

### (Biomass Films)

Specific examples of well-known biomass films include those produced using biomass-derived ethylene glycol as a raw material. The biomass-derived ethylene glycol is obtained from ethanol (biomass ethanol) produced from biomass as a raw material. Biomass-derived ethylene glycol can be produced from biomass ethanol by a conventional method, by a method in which ethylene glycol is generated via ethylene oxide, or the like. Commercially available biomass ethylene glycol may also be used; for example, biomass ethylene glycol marketed by India Glycols Ltd. can be suitably employed.

For example, as an alternative to conventional petroleum-based polyethylene terephthalate films, there are known films containing a biomass polyester or biomass polyethylene terephthalate, in which biomass-derived ethylene glycol serves as the diol unit and a fossil-fuel-derived dicarboxylic acid serves as the dicarboxylic acid unit.

The dicarboxylic acid unit of the biomass polyester uses a fossil fuel-derived dicarboxylic acid. As the dicarboxylic acid, aromatic dicarboxylic acids, aliphatic dicarboxylic acids, and derivatives thereof may be used without particular limitation.

In addition to the above diol component and the dicarboxylic acid component, a copolymer polyester may be used in which a copolymerizable component is incorporated as a third component, such as at least one polyfunctional compound selected from the group consisting of polyhydric alcohols having three or more functional groups, polycarboxylic acids having three or more functional groups and/or anhydrides thereof, and oxycarboxylic acids having three or more functional groups, in order to form a crosslinked structure.

For example, as an alternative to the polyolefin films which use conventional fossil fuel derived raw materials, biomass polyolefin films such as biomass polyethylene films containing a polyethylene resin produced using biomass-derived ethylene glycol as a raw material, and biomass polyethylene-polypropylene films are also known.

The polyethylene resin is not particularly limited other than using the above biomass-derived ethylene glycol as part of the raw materials, and examples thereof include ethylene homopolymers and copolymers of ethylene with an α-olefin in which ethylene is the main component (ethylene-α-olefin copolymers containing 90% by mass or more of ethylene units). These resins may be used one kind alone or in combination of two or more kinds.

Note that the α-olefin constituting the copolymer of ethylene and an α-olefin is not particularly limited, and examples include α-olefins having 4 to 8 carbon atoms such as 1-butene, 4-methyl-1-pentene, 1-hexene, and 1-octene. Known polyethylene resins such as low-density polyethylene resins, medium-density polyethylene resins, and linear low-density polyethylene resins may be used. Among these, from the viewpoint of further reducing the occurrence of damage such as pinholes or tearing even when the films are rubbed against each other, linear low-density polyethylene resins (LLDPE) (copolymers of ethylene and 1-hexene or copolymers of ethylene and 1-octene) are preferred, and linear low-density polyethylene resins having a density of 0.910 to 0.925 g/cm³ are more preferred.

As biomass films, those produced using biomass raw materials classified according to the biobased carbon content determined in ISO 16620 or ASTM D6866 are also commercially available. In the atmosphere, one out of 1012 carbon atoms exists as radioactive carbon 14C, and this ratio does not change in atmospheric carbon dioxide. Accordingly, the same ratio is maintained in plants, in which carbon dioxide is fixed through photosynthesis. For this reason, the carbon contained in plant-derived resins includes radioactive carbon 14C. In contrast, the carbon contained in fossil-fuel-derived resins contains almost no radioactive carbon 14C. Therefore, by measuring the concentration of radioactive carbon 14C in a resin using an accelerator mass spectrometer, the proportion of plant-derived resin contained in the resin, namely, the biobased carbon content, can be determined.

Examples of plant-derived low-density polyethylene that is a biomass plastic having a biobased carbon content of 80% or more, preferably 90% or more, as defined in ISO 16620 or ASTM D6866, include "SBC818," "SPB608," "SBF0323HC," "STN7006," "SEB853," and "SPB681," manufactured by Braskem, and films produced using these as raw materials can be suitably used.

In addition, films or sheets blended with biomass raw materials such as starch or polylactic acid are also known. These can be appropriately selected and used depending on the intended application.

The biomass film may be a laminate obtained by laminating a plurality of biomass films, or a laminate of a conventional petroleum-based film and a biomass film. The biomass films may be either non-oriented films or oriented films, and their production methods are not limited.

### (Biodegradable Films)

Examples of well-known biodegradable films include those produced from generally available biodegradable resins as raw materials. Examples include polycaprolactone, polyvinyl alcohol, polyamide, cellulose esters, lactic-acid-based polyester resins, aliphatic polyester resins, and aliphatic-aromatic polyester resins. These biodegradable resins may be used one kind alone or in combination of two or more kinds. Among these, aliphatic polyester resins and aliphatic-aromatic polyester resins are preferably used.

Examples of the aliphatic polyester resins include aliphatic polyesters obtained by a polycondensation reaction of an aliphatic diol with an aliphatic dicarboxylic acid. Examples of the aliphatic diols include ethylene glycol, 1,3-propanediol, 1,4-butanediol, 1,5-pentanediol, 1,6-hexanediol, 1,4-cyclohexanediol, and 1,4-cyclohexanedimethanol. These may be used individually or as mixtures, and the use of 1,4-butanediol is particularly preferred. Examples of the aliphatic dicarboxylic acids include oxalic acid, succinic acid, glutaric acid, adipic acid, sebacic acid, suberic acid, and dodecanedioic acid, and the anhydrides thereof may also be used. Among these, succinic acid or succinic anhydride, or mixtures thereof with adipic acid, are preferred.

Specific examples include polybutylene succinate (PBS) obtained from 1,4-butanediol and succinic acid (for example, BioPBS manufactured by PPT MCC Biochem), and polybutylene succinate adipate (PBSA), which is obtained by copolymerizing PBS with adipic acid.

Examples of the aliphatic-aromatic polyester resins include copolymers containing an aliphatic dicarboxylic acid unit, an aromatic dicarboxylic acid unit, and a linear aliphatic and/or alicyclic diol unit. The diol component providing the diol unit usually has 2 to 10 carbon atoms, and examples include ethylene glycol, 1,3-propanediol, 1,4-butanediol, and 1,4-cyclohexanedimethanol. Among these, diols having 2 to 4 carbon atoms are preferred, ethylene glycol and 1,4-butanediol are more preferred, and 1,4-butanediol is particularly preferred. The dicarboxylic acid component providing the aliphatic dicarboxylic acid unit usually has 2 to 10 carbon atoms, and examples include succinic acid, adipic acid, suberic acid, sebacic acid, and dodecanedioic acid. Among these, succinic acid or adipic acid is preferred. Examples of the aromatic dicarboxylic acid component providing the aromatic dicarboxylic acid unit include terephthalic acid, isophthalic acid, and naphthalenedicarboxylic acid. Among these, terephthalic acid and isophthalic acid are preferred, and terephthalic acid is particularly preferred.

Specific examples include poly(butylene adipate-co-terephthalate) (PBAT), which is a copolymer of 1,4-butanediol, adipic acid, and terephthalic acid (for example, Ecoflex manufactured by BASF).

Other examples include poly(3-hydroxyalkanoates), which are aliphatic polyester copolymers obtained from a hydroxyalkanoic acid and a polycarboxylic acid, (among these, examples include poly(3-hydroxybutyrate-co-3-hydroxyhexanoate) (PHBH) (for example, Aonilex manufactured by Kaneka), and polylactic acid (PLA) (for example, REVODE manufactured by Hisun Biomaterials, or Ingeo manufactured by NatureWorks)).

The biodegradable film may be a laminate obtained by laminating a plurality of biodegradable films, or a laminate of a conventional petroleum-based film and a biodegradable film. In addition, the biodegradable films may be either unoriented films or oriented films, and their production methods are not limited.

The film may be one that has undergone an orientation treatment. As the method for the orientation treatment, it is general to melt-extrude a resin into a sheet by an extrusion film-forming method and then perform simultaneous biaxial orientation or sequential biaxial orientation. In the case of sequential biaxial orientation, it is general to first perform longitudinal orientation and then perform transverse orientation. Specifically, a method is often used in which longitudinal orientation is performed by utilizing a difference in speed between rolls, and transverse orientation is performed using a tenter.

The film surface may be subjected to various surface treatments such as flame treatment or corona discharge treatment, as necessary, so that an adhesive layer having no defects such as film breakage or repellence is formed.

Alternatively, a film having a vapor-deposited layer of a metal such as aluminum or a metal oxide such as silica or alumina, and a barrier film containing a gas-barrier layer such as polyvinyl alcohol, an ethylene-vinyl alcohol copolymer, or vinylidene chloride may be used in combination. By using such films, a laminate having barrier properties against water vapor, oxygen, alcohol, inert gases, volatile organic substances (aroma), and the like can be obtained.

As paper, known paper base materials can be employed without particular limitation. Specifically, paper is produced by a known paper machine using natural fibers for papermaking such as wood pulp, but the papermaking conditions are not particularly specified. Examples of the natural fibers for papermaking include wood pulps such as softwood pulp and hardwood pulp, non-wood pulps such as Manila hemp pulp, sisal hemp pulp, and flax pulp, and pulps obtained by chemically modifying these pulps. As the types of pulp, chemical pulps obtained by sulfate pulping, acidic, neutral, or alkaline sulfite pulping, and soda pulping, and ground pulp, chemiground pulp, and thermomechanical pulp can be used. In addition, various commercially available papers such as high-quality paper, coated paper, backing paper, impregnated paper, cardboard, and paperboard may also be used.

More specific examples of the structure of the laminate include:
(1) base material 1 / adhesive layer 1 / sealant film;
(2) base material 1 / adhesive layer 1 / metal-deposited unoriented film;
(3) base material 1 / adhesive layer 1 / metal-deposited oriented film;
(4) transparent-deposited oriented film / adhesive layer 1 / sealant film;
(5) base material 1 / adhesive layer 1 / base material 2 / adhesive layer 2 / sealant film;
(6) base material 1 / adhesive layer 1 / metal-deposited oriented film / adhesive layer 2 / sealant film;
(7) base material 1 / adhesive layer 1 / transparent-deposited oriented film / adhesive layer 2 / sealant film;
(8) base material 1 / adhesive layer 1 / metal layer / adhesive layer 2 / sealant film;
(9) base material 1 / adhesive layer 1 / base material 2 / adhesive layer 2 / metal layer / adhesive layer 3 / sealant film; and
(10) base material 1 / adhesive layer 1 / metal layer / adhesive layer 2 / base material 2 / adhesive layer 3 / sealant film,
but are not limited thereto.

As the base material 1 used in structure (1), examples include MDOPE films, OPE films, OPP films, PET films, nylon films, and paper. As the base material 1, those provided with a coating for purposes such as imparting gas-barrier properties or improving ink receptivity when a printing layer is provided as described later may also be used. Examples of commercially available coated base material films 1 include K-OPP films, K-PET films, and K-nylon films. The adhesive layer 1 is a cured coating film of the adhesive of the present invention. Examples of the sealant film include CPP films, LLDPE films, easy-open heat-seal films, and gas-barrier heat-seal films. A printing layer may be provided on the surface of base material 1 on the side of adhesive layer 1 (in the case where a coated base material film 1 is used, on the surface of the coating layer on the side of adhesive layer 1) or on the surface opposite to adhesive layer 1. The printing layer is formed by general printing methods conventionally used for printing on polymer films or paper, using various printing inks such as gravure inks, flexographic inks, offset inks, screen printing inks, and inkjet inks.

As the base material 1 used in structures (2) and (3), examples include MDOPE films, OPE films, OPP films, PET films, and paper. The adhesive layer 1 is a cured coating film of the adhesive of the present invention. As the metal-deposited unoriented film, VMCPP films, VM-LLDPE films, and the like, in which a metal such as aluminum is vapor-deposited on CPP films, LLDPE films, or gas-barrier heat-seal films, can be used. As the metal-deposited oriented film, VM-MDOPE films, VM-OPE films, and VM-OPP films, in which a metal such as aluminum is vapor-deposited on MDOPE films, OPE films, or OPP films, can be used. As in structure (1), a printing layer may be provided on either surface of base material 1.

As the transparent-deposited oriented film used in structure (4), examples include films in which silica or alumina is vapor-deposited on MDOPE films, OPE films, OPP films, PET films, or nylon films. A film provided with a coating on the vapor-deposited layer for purposes such as protecting the inorganic vapor-deposited layer of silica or alumina may also be used. The adhesive layer 1 is a cured coating film of the adhesive of the present invention. Examples of the sealant film are the same as those in structure (1). A printing layer may be provided on the surface of the transparent-deposited oriented film on the side of adhesive layer 1 (when a film provided with a coating on the inorganic vapor-deposited layer is used, on the surface of the coating layer on the side of adhesive layer 1). The method for forming the printing layer is the same as in structure (1).

For the base material 1 used in structure (5), examples include PET films and paper. For the base material 2, examples include nylon films. At least one of adhesive layer 1 and adhesive layer 2 is a cured coating film of the adhesive of the present invention. Examples of the sealant film are the same as those in structure (1). A printing layer may be provided on either surface of the base material 1, in the same manner as in structure (1).

For the base material 1 used in structure (6), examples include those the same as in structures (2) and (3). As the metal-deposited oriented film, examples include VM-MDOPE films, VM-OPE films, VM-OPP films, and VM-PET films, which are obtained by depositing a metal such as aluminum onto MDOPE films, OPE films, OPP films, or PET films. At least one of adhesive layer 1 and adhesive layer 2 is a cured coating film of the adhesive of the present invention. Examples of the sealant film are the same as those in structure (1). A printing layer may be provided on either surface of the base material 1, in the same manner as in structure (1).

For the base material 1 used in structure (7), examples include PET films and paper. As the transparent vapor-deposited oriented film, examples include those the same as in structure (4). At least one of adhesive layers 1 and 2 is a cured coating film of the adhesive of the present invention. Examples of the sealant film are the same as those in structure (1). A printing layer may be provided on either surface of the base material 1 in the same manner as in structure (1).

As the base material 1 used in structure (8), examples include PET films and paper. As the metal layer, examples include aluminum foil. At least one of adhesive layers 1 and 2 is a cured coating film of the adhesive of the present invention. Examples of the sealant film are the same as those in structure (1). A printing layer may be provided on either surface of the base material 1, in the same manner as in structure (1).

As the base material 1 used in structures (9) and (10), examples include PET films and paper. As the base material 2, examples include nylon films. As the metal layer, examples include aluminum foil. At least one of the adhesive layers 1, 2, and 3 is a cured coating film of the adhesive of the present invention. Examples of the sealant film are the same as those in structure (1). A printing layer may be provided on either surface of the base material 1, in the same manner as structure (1).

The adhesive of the present invention exhibits excellent adhesion to metal base materials and metal-deposited layers, and the decrease in adhesion during long-term storage is also suppressed; therefore, it is particularly suitably used for the production of the structures (2), (3), (6), and (8) to (10). Among these structures, it is preferable that the adhesive layer in contact with the metal base material or the metal-deposited layer is the cured coating film of the adhesive of the present invention.

When the adhesive of the present invention is used as an adhesion promoter, the adhesion aid of the present invention is applied to the film material serving as the base material using a roll such as a gravure roll, and after volatilizing the organic solvent by heating in an oven or the like, a polymer material melted by an extruder is laminated, thereby obtaining the laminate of the present invention.

The laminate of the present invention may further contain other films or base materials in addition to the above structures (1) to (10). As other base materials, in addition to the above-described oriented films, unoriented films, and transparent vapor-deposited films, porous base materials such as paper, wood, and leather described later may also be used. The adhesive used when bonding other base materials may be the adhesive of the present invention or may be another adhesive.

The "other layers" may contain known additives and stabilizers, such as antistatic agents, easy-adhesion coating agents, plasticizers, lubricants, and antioxidants. The "other layers" may also be those in which the film surface has been subjected to pretreatment such as corona treatment, plasma treatment, ozone treatment, chemical treatment, or solvent treatment in order to improve adhesion when laminating with other materials.

The laminate of the present invention can be suitably used in various applications, such as packaging materials for foods, pharmaceuticals, and daily necessities, lidding materials, paper tableware such as paper straws, paper napkins, paper spoons, paper plates, and paper cups, barrier materials, roofing materials, materials for solar cell panels, packaging materials for batteries, window materials, outdoor flooring materials, protective materials for lighting, automotive components, signboards and stickers and other outdoor industrial uses, decorative sheets used in, for example, in-mold decoration methods, and packaging materials for liquid detergents for laundry, liquid detergents for kitchen use, liquid bath detergents, liquid bath soaps, liquid shampoos, and liquid conditioners.

### <Packaging material>

The laminate of the present invention can be used as a multilayer packaging material intended for protecting food, pharmaceuticals, and the like. When used as a multilayer packaging material, the layer structure may vary depending on the contents, the environment of use, and the manner of use. Further, the packaging material of the present invention may be provided, as appropriate, with an easy-open treatment or resealable means.

As one example of specific aspects of the packaging material of the present invention, a packaging material formed by making a bag from a laminate having a sealant film, such as the laminate structures (1) and (4) to (10) described above, can be given. The laminate is folded or superposed so that the surfaces of the inner layer (the surface of the sealant film) face each other, and the peripheral edges are heat-sealed to form a bag. Examples of bag-making methods include methods in which heat sealing is performed in forms such as side-seal type, two-side-seal type, three-side-seal type, four-side-seal type, envelope-seal type, longitudinal-fin-seal type, gusset-seal type, flat-bottom-seal type, block-bottom-seal type, and gusset type, as well as other heat-seal types. The packaging material of the present invention can take various forms depending on the contents, the usage environment, and the manner of use. Self-standing packaging materials (standing pouches) are also possible. Examples of heat-sealing methods include bar sealing, rotary-roll sealing, belt sealing, impulse sealing, high-frequency sealing, and ultrasonic sealing.

After the contents are filled into the packaging material of the present invention through its opening, the opening is heat-sealed, and thereby a product using the packaging material of the present invention is manufactured. Examples of the contents to be filled include, for instance, in the case of foods: confectionery such as rice crackers, bean snacks, nuts, biscuits/cookies, wafer confectionery, marshmallows, pies, semi-moist cakes, candies, and snack foods; staple foods such as bread, snack noodles, instant noodles, dried noodles, pasta, aseptically packaged cooked rice, porridge, packaged rice cake, and cereal foods; processed agricultural products such as pickles, simmered beans, natto, miso, frozen tofu, tofu, seasoned nametake mushrooms, processed edible wild plants, jams, peanut cream, salads, frozen vegetables, and processed potato products; processed livestock products such as hams, bacon, sausages, chicken products, and corned beef; processed marine products such as fish-meat hams/sausages, fish-paste products, kamaboko, dried seaweed, tsukudani, dried bonito flakes, salted seafood, smoked salmon, and seasoned cod roe; fruits such as peaches, mandarins, pineapples, apples, pears, and cherries; vegetables such as corn, asparagus, mushrooms, onions, carrots, radishes, and potatoes; prepared frozen foods represented by hamburg steak, meatballs, fried marine products, dumplings, and croquettes, as well as chilled prepared foods; dairy products such as butter, margarine, cheese, cream, instant creamy powders, and infant formula; and food products such as liquid seasonings, retort curry, pet food.

Further, it can also be used as various packaging materials for non-foods, such as tobacco; disposable heating pads; pharmaceuticals such as infusion packs; laundry liquid detergents; kitchen liquid detergents; bath liquid detergents; bath liquid soaps; liquid shampoos; liquid conditioners; cosmetics such as lotions and emulsions; vacuum insulation materials; and batteries.

### EXAMPLES

The present invention will be described in further detail below with reference to specific Synthesis Examples and Examples; however, the present invention is not limited to these Examples. In the following Examples, "parts" and "%" respectively mean "parts by mass" and "% by mass" unless otherwise specified.

### <Polyisocyanate compound (X)>

### (Polyisocyanate composition (X-1))

A mixture of a polyurethane polyisocyanate (A1-1) obtained from a polypropylene polyol (average number of functional groups: 3; hydroxyl value: 168 mgKOH/g) and a compound (A2-1-1) having an isocyanate group in which ricinoleic acid is bonded only to one terminal of toluene diisocyanate was used as the polyisocyanate composition (X-1). The content of toluene diisocyanate in the polyisocyanate composition (X-1) was 0.04% by mass, and the content of the compound (A2-1-1) was 1.0% by mass. The NCO% of the polyisocyanate composition (X-1) was 8.29%

### (Polyisocyanate composition (X-2))

A mixture of a polyurethane polyisocyanate (A1-1) obtained from a polypropylene polyol (average number of functional groups: 3; hydroxyl value: 168 mgKOH/g) and a compound (A2-1-1) having an isocyanate group in which ricinoleic acid is bonded only to one terminal of toluene diisocyanate, was used as the polyisocyanate composition (X-2). The content of toluene diisocyanate in the polyisocyanate composition (X-2) was 0.04 mass%, and the content of the compound (A2-1-1) was 0.1 mass%. The NCO% of the polyisocyanate composition (X-2) was 8.28.

### (Polyisocyanate composition (X-3))

A mixture of a polyurethane polyisocyanate (A1-1) obtained from a polypropylene polyol (average number of functional groups: 3; hydroxyl value: 168 mgKOH/g) and a compound (A2-1-1) having an isocyanate group in which ricinoleic acid is bonded only to one terminal of toluene diisocyanate was used as the polyisocyanate composition (X-3). The content of toluene diisocyanate in the polyisocyanate composition (X-3) was 0.04% by mass, and the content of the compound (A2-1-1) was 5.0% by mass. The NCO% of the polyisocyanate composition (X-3) was 8.31%.

### (Polyisocyanate composition (X-4))

A mixture of a polyurethane polyisocyanate (A1-1) obtained from a polypropylene polyol (average number of functional groups: 3; hydroxyl value: 168 mgKOH/g) and toluene diisocyanate, and a compound (A2-1-2) having an isocyanate group in which 12-hydroxystearic acid is bonded only to one terminal of toluene diisocyanate, was used as the polyisocyanate composition (X-4). The content of toluene diisocyanate in the polyisocyanate composition (X-4) was 0.04% by mass, and the content of the compound (A2-1-2) was 1.0% by mass. The NCO% of the polyisocyanate composition (X-4) was 8.29%.

### (Polyisocyanate composition (X-5))

A mixture of a polyurethane polyisocyanate (A1-1) obtained from a polypropylene polyol (average number of functional groups: 3; hydroxyl value: 168 mgKOH/g) and a compound (A2-1-3) having an isocyanate group in which lactic acid is bonded only to one terminal of toluene diisocyanate, was used as the polyisocyanate composition (X-5). The content of toluene diisocyanate in the polyisocyanate composition (X-5) was 0.04% by mass, and the content of the compound (A2-1-3) was 1.0% by mass. The NCO% of the polyisocyanate composition (X-5) was 8.36%.

### (Polyisocyanate composition (X-6))

A mixture of a polyurethane polyisocyanate (A1-2) obtained from purified castor oil (average number of functional groups: 2.6; hydroxyl value: 160 mgKOH/g) and toluene diisocyanate, and a compound (A2-1-1) having an isocyanate group in which ricinoleic acid is bonded only to one terminal of toluene diisocyanate, was used as the polyisocyanate composition (X-6). The content of toluene diisocyanate in the polyisocyanate composition (X-6) was 0.04% by mass, and the content of the compound (A2-1-1) was 1.0% by mass. The NCO% of the polyisocyanate composition (X-6) was 8.02%.

### (Polyisocyanate composition (X-7))

A mixture of a polyurethane polyisocyanate (A1-3) obtained from refined castor oil (average number of functional groups: 2.6; hydroxyl value: 160 mgKOH/g) and hexamethylene diisocyanate, and a compound (A2-1-4) having an isocyanate group in which ricinoleic acid is bonded only to one terminal of hexamethylene diisocyanate, was used as the polyisocyanate composition (X-7). In the polyisocyanate composition (X-7), the content of hexamethylene diisocyanate was 0.04% by mass, and the content of the compound (A2-1-4) was 1.0% by mass. The NCO% of the polyisocyanate composition (X-7) was 8.11%.

### (Polyisocyanate composition (X-8))

A mixture of a polyurethane polyisocyanate (A1-4) obtained from polypropylene glycol (average number of functional groups: 2; hydroxyl value: 112 mgKOH/g) and a compound (A2-1-1) having an isocyanate group in which ricinoleic acid is bonded only to one terminal of toluene diisocyanate was used as the polyisocyanate composition (X-8). The content of toluene diisocyanate in the polyisocyanate composition (X-8) was 0.04% by mass, and the content of the compound (A2-1-1) was 1.0% by mass. The NCO% of the polyisocyanate composition (X-8) was 6.26%.

### (Polyisocyanate composition (X'-1))

A polyurethane polyisocyanate (A1-1) obtained from a polypropylene polyol (average number of functional groups: 3; hydroxyl value: 168 mgKOH/g) and toluene diisocyanate was used as the polyisocyanate composition (X'-1). The content of toluene diisocyanate in the polyisocyanate composition (X'-1) was 1.0% by mass. The NCO% of the polyisocyanate composition (X'-1) was 8.70%.

### <Polyol Composition (Y)>

### (Polyol composition (Y-1))

A polypropylene polyol (average number of functional groups: 3; hydroxyl value: 168 mgKOH/g) was used as the polyol composition (Y-1).

### (Polyol composition (Y-2))

A mixture of 40.0 parts of polypropylene glycol (average number of functional groups: 2; hydroxyl value: 280 mgKOH/g), 45.3 parts of refined castor oil (average number of functional groups: 2.6; hydroxyl value: 160 mgKOH/g), and 7.8 parts of Jeffamine T403 was used as the polyol composition (Y-2).

### <Preparation of Evaluation Samples>

### (Example 1)

A mixture of 1.4 parts of the polyisocyanate composition (X-1) and 0.6 parts of the polyol composition (Y-1) was stirred to prepare the adhesive of Example 1. The adhesive of Example 1 was applied to an OPP film (P2126 manufactured by Toyobo Co., Ltd.) in the amount of 2.0 g/m², and the coated film was laminated with a VMCPP film (2703 manufactured by Toray Film Processing Co., Ltd.) using nip rolls (50 °C). The laminate of OPP/VMCPP was obtained by aging at 40 °C for 3 days.

### (Examples 2 to 5, 7, 8, and Comparative Example 1)

Except that the polyisocyanate compositions (X) and the polyol compositions (Y) used were changed to those shown in Tables 1 and 2, laminates were obtained in the same manner as in Example 1.

### (Example 6)

A heated polyisocyanate composition (X) was applied to an OPP film, and a heated polyol composition (Y) was applied to a VMCPP film, and a PET film and the VMCPP film were press-bonded using nip rolls (50 °C). The laminate of OPP/VMCPP was obtained by aging at 40 °C for 3 days. The coating amount of the polyisocyanate composition (X) was 1.4 g/m², and the coating amount of the polyol composition (Y) was 0.6 g/m².

### <Evaluation>

### (Initial Laminated Strength)

After completion of aging, the laminate was cut into specimens having a length of 300 mm and a width of 15 mm. Using a tensile tester manufactured by Instron, the T-peel strength between the OPP and VMCPP layers was measured at 25 °C at a peel rate of 300 mm/min. The test was conducted five times, and the average value was calculated. The samples were then evaluated according to the following criteria, and the results are summarized in Tables 1 and 2.
5: 1.5 N/15 mm or more
4: 1.0 N/15 mm or more and less than 1.5 N/15 mm
3: 0.5 N/15 mm or more and less than 1.0 N/15 mm
2: 0.2 N/15 mm or more and less than 0.5 N/15 mm
1: Less than 0.2 N/15 mm

### (Laminated Strength After 6-Month Storage)

Except that the aged laminate was further stored at room temperature for six months, the laminated strength after six-month storage was measured in the same manner as the initial laminated strength. The results are summarized in Tables 1 and 2.

**[Table 1]**

| | Example 1 | Example 2 | Example 3 | Example 4 | Example 5 |
|---|---|---|---|---|---|
| Polyisocyanate composition (X-1) | 1.4 | | | | |
| Polyisocyanate composition (X-2) | | 1.4 | | | |
| Polyisocyanate composition (X-3) | | | 1.4 | | |
| Polyisocyanate composition (X-4) | | | | 1.4 | |
| Polyisocyanate composition (X-5) | | | | | 1.4 |
| Polyisocyanate composition (X-6) | | | | | |
| Polyisocyanate composition (X-7) | | | | | |
| Polyisocyanate composition (X-8) | | | | | |
| Polyisocyanate composition (X'-1) | | | | | |
| Polyol composition (Y-1) | 0.6 | 0.6 | 0.6 | 0.6 | 0.6 |
| Polyol composition (Y-2) | | | | | |
| NCO/OH | 1.54 | 1.54 | 1.54 | 1.54 | 1.54 |
| Initial laminated strength | 5 | 5 | 4 | 5 | 5 |
| Laminated strength after 6-month storage | 5 | 4 | 4 | 4 | 4 |

**[Table 2]**

| | Example 6 | Example 7 | Example 8 | Comparative Example 1 |
|---|---|---|---|---|
| Polyisocyanate composition (X-1) | | | | |
| Polyisocyanate composition (X-2) | | | | |
| Polyisocyanate composition (X-3) | | | | |
| Polyisocyanate composition (X-4) | | | | |
| Polyisocyanate composition (X-5) | | | | |
| Polyisocyanate composition (X-6) | 1.5 | | | |
| Polyisocyanate composition (X-7) | | 1.4 | | |
| Polyisocyanate composition (X-8) | | | 1.5 | |
| Polyisocyanate composition (X'-1) | | | | 1.4 |
| Polyol composition (Y-1) | | 0.6 | 0.5 | 0.6 |
| Polyol composition (Y-2) | 0.5 | | | |
| NCO/OH | 1.46 | 1.50 | 1.49 | 1.61 |
| Initial laminated strength | 5 | 4 | 4 | 4 |
| Laminated strength after 6-month storage | 5 | 3 | 4 | 1 |

## Claims

1. A polyisocyanate composition comprising:
(A1) a polyurethane polyisocyanate; and
(A2) an isocyanate compound which is a reaction product of an aliphatic hydroxycarboxylic acid and a diisocyanate.

2. The polyisocyanate composition according to claim 1,
wherein the aliphatic hydroxycarboxylic acid has a melting point of 80 °C or lower.

3. The polyisocyanate composition according to claim 1,
wherein the aliphatic hydroxycarboxylic acid is at least one selected from glycolic acid, lactic acid, glyceric acid, hydroxybutyric acid, tartronic acid, malic acid, tartaric acid, citric acid, dimethylolpropionic acid, dimethylolbutanoic acid, ricinoleic acid, and 12-hydroxystearic acid.

4. The polyisocyanate composition according to claim 1,
wherein the polyurethane polyisocyanate (A1) is a reaction product of a polyol and a diisocyanate, and the polyol contains a polyol having 3 or more functional groups.

5. The polyisocyanate composition according to claim 4,
wherein the polyol has an average number of functional groups of 2.1 or more and 3.5 or less.

6. The polyisocyanate composition according to claim 1,
wherein the proportion of the isocyanate composition (A2) in the total amount of the polyurethane polyisocyanate (A1) and the isocyanate composition (A2) is 0.05 % by mass or more and 10 % by mass or less.

7. The polyisocyanate composition according to claim 1,
wherein the content of the diisocyanate monomer is 0.1 % by mass or less.

8. A two-part curable composition comprising:
(X) a polyisocyanate composition; and
(Y) a polyol composition,
wherein the polyisocyanate composition (X) contains a polyurethane polyisocyanate (A1) and an isocyanate compound (A2) which is a reaction product of an aliphatic hydroxycarboxylic acid and a diisocyanate, and
wherein the polyol composition (Y) contains a polyol compound (B).

9. A two-part curable adhesive comprising:
(X) a polyisocyanate composition; and
(Y) a polyol composition,
wherein the polyisocyanate composition (X) contains a polyurethane polyisocyanate (A1) and an isocyanate compound (A2) which is a reaction product of an aliphatic hydroxycarboxylic acid and a diisocyanate, and
wherein the polyol composition (Y) contains a polyol compound (B).

10. A laminate comprising:
a first base material;
a second base material; and
an adhesive layer bonding the first base material and the second base material,
wherein the adhesive layer is a cured coating film of the two-part curable adhesive according to claim 9.

11. The laminate according to claim 10,
wherein the first base material has a metal-deposited layer on the adhesive layer side.

12. A packaging material comprising the laminate according to claim 10.
